# EUROPÄISCHE PATENTSCHRIFT

(11) **EP 3 180 530 B1**
(45) Veröffentlichungstag und Bekanntmachung des Hinweises auf die Patenterteilung: **06.12.2017**
(21) Anmeldenummer: 15790443.4
(22) Anmeldetag: 28.07.2015
(51) Int. Cl.: F16D 3/26

(54) **NOTHANDKURBELTRIEB FÜR EINE IN DREHUNG ZU BRINGENDE WELLE**
EMERGENCY HAND CRANK DRIVE FOR A SHAFT THAT IS TO BE MADE TO ROTATE
ACTIONNEMENT MANUEL DE SECOURS POUR MANIVELLE, POUR UN ARBRE À METTRE EN ROTATION

(30) Priorität: 11.08.2014 DE 102014011778
(43) Veröffentlichungstag der Anmeldung: 21.06.2017
(73) Patentinhaber: KOSCHINAT, Hubert, 63768 Hösbach (DE)
(72) Erfinder: KOSCHINAT, Hubert, 63768 Hösbach (DE)
(86) Internationale Anmeldenummer: PCT/DE2015/000392
(87) Internationale Veröffentlichungsnummer: WO 2016/023532

(56) Entgegenhaltungen:
- EP-A1- 0 844 208
- DE-A1- 3 631 381
- DE-C- 855 187

## Beschreibung

Die Erfindung bezieht sich auf einen Nothandkurbeltrieb bestehend aus einer in Drehung zu bringenden Lastwelle und einem gelenkig mit der Lastwelle verbundenen Kurbelarm und einem Kupplungsstück auf der Lastwelle und einem Mitnehmer, der fest mit dem Kurbelarm verbunden ist und der zum Kupplungsstück komplementär geformt und lösbar damit verbindbar ist

Auf dem aktuellen Stand der Technik werden zum Antreiben von Geräten und zum Verstellen von mechanischen Vorrichtungen zunehmend Motore, vorrangig Elektromotore eingesetzt. Aber wenn die Energieversorgung des Motors oder der Motor selbst ausfällt, ist eine manuell betriebene Handkurbel eine sehr wirtschaftliche Alternative für den Notbetrieb.

Die Patentschrift DE 855 187 beschreibt, dass auf einer in Drehung zu bringenden Lastwelle ein Kurbelarm gelenkig angeordnet ist. Mit dem Kurbelarm ist ein klauenartiger Mitnehmer fest verbunden, der im Notfall in ein dazu komplementär geformtes Kupplungsstück eingreift, das auf der Lastwelle fest montiert ist. Weil diese Verbindung zwischen Mitnehmer und Kupplungsstück lösbar ist, der Kurbelarm aber auch in diesem Zustand weiterhin gelenkig mit der Lastwelle verbunden ist, kann der Kurbelarm jederzeit mit sehr geringem Aufwand manuell wieder in Betrieb genommen werden und Drehmoment auf die Lastwelle übertragen. Alternativ zu dem Kurbelarm wird die Lastwelle durch einen Motor angetrieben, der mit ihr durch ein Kupplungsstück verbunden ist.

Der entscheidende Nachteil von DE 855 187 ist, dass der Kurbelarm auch im unbenutzten Zustand in seiner Betriebsposition verbleiben kann. Seine zuvor sehr erwünschte, gute Erreichbarkeit wird dann zu einem gravierenden Nachteil, weil im Fall des Antriebs mit einem Motor das Risiko von Kollisionen mit der frei rotierenden Kurbel und damit auch von Verletzungen des Bedienungspersonals stark ansteigt. Nachteilig ist auch, dass dadurch ein relativ großer Bauraum beansprucht wird, der für andere Funktionen dringend erforderlich sein kann.

Ein weiterer Nachteil ist, dass für den Motorbetrieb ein weiteres Kupplungsstück nötig ist, für das die Lastwelle entsprechend verlängert werden muss.

Auf diesem Hintergrund hat sich die Erfindung die Aufgabe gestellt, einen Kurbeltrieb für den Notfall zu entwickeln, der die beschriebenen Nachteile vermeidet und dazu bei Nichtbenutzung von seiner Betriebsstellung so weit entfernt werden kann, dass er nur noch einen relativ geringen Raum beansprucht, aber dennoch weiterhin mit der Lastwelle verbunden bleibt, so dass er schnell und mit geringem Aufwand wieder in seine Betriebsstellung zurückgeführt werden kann.

Als Lösung lehrt die Erfindung, dass ein Drehgleitstück auf der Lastwelle in deren Längsrichtung verschiebbar und um deren Längsrichtung herum verdrehbar gelagert ist und am Drehgleitstück der Kurbelarm gelenkig befestigt ist. In der Regel wird am Kurbelarm ein senkrecht dazu ausgerichteter Handgriff befestigt und beide zusammen bilden dann die Nothandkurbel.

In seiner einfachsten Ausführungsform ist das Drehgleitstück eine Hülse, also ein Hohlzylinder, der die Lastwelle konzentrisch umfasst Dadurch ist er auf der Lastwelle in axialer Richtung verschiebbar. Wenn die Lastwelle z.B. durch einen externen Motor in Drehung versetzt wird, so muss das Drehgleitstück dieser Drehung nicht folgen, sondern kann ortsfest in seiner Position verbleiben, indem es auf der sich drehenden Lastwelle gleitet. Weil der Kurbelarm am Drehgleitstück gelenkig befestigt ist, ist es möglich, die Nothandkurbel aus ihrer Betriebsposition heraus abzuklappen und näher an die anzutreibende Vorrichtung heran zu schieben. In dieser Wartestellung beansprucht die Nothandkurbel erheblich weniger Bauraum als in ihrer Betriebsposition und das Risiko einer Kollision mit anderen Maschinenteilen oder mit den bedienenden Personen wird vermieden.

Um die Nothandkurbel aus ihrer Wartestellung heraus wieder zurück in die Betriebsposition zu überführen, reichen eine Verschiebung des Drehgleitstückes auf der Lastwelle und ein Verschwenken der Nothandkurbel aus.

Das Kupplungsstück auf der Lastwelle kann in Bezug auf deren Mittellinie beliebig angeordnet werden, nur begrenzt dadurch, dass die kreisförmige Bewegung des Handgriffes und der Freiraum für die Hand und den Arm des Benutzers davon nicht beeinträchtigt wird. Wenn das Kupplungsstück außerhalb der Mittellinie angeordnet wird, ist seine Form beliebig und deshalb auch ein rundes Profil verwendbar.

Die Erfindung bevorzugt jedoch, dass das Kupplungsstück konzentrisch auf der Mittellinie der Lastwelle angeordnet ist In diesem Fall ist als Kupplungsstück jedes nichtrunde Profil oder jede Ausformung der Stirnfläche geeignet, wie es zum Beispiel von Schraubenköpfen bekannt ist Weithin bekannt und gut geeignet ist ein Vierkant, möglich sind aber auch ein Dreikant, ein Sechskant oder eine Vielkeilverzahnung. Andere Alternativen dazu sind ein Schlitz, ein Kreuzschlitz oder Vertiefungen mit zungenartigen Ausformungen wie zum Beispiel TORX ®, auch als Sechsrund bezeichnet

Dieses Kupplungsstück dient vorzugsweise auch für das Ankoppeln eines externen motorischen Antriebes, der selbstverständlich mit einem passenden Mitnehmer ausgerüstet werden muss. Gut dafür geeignet sind auf aktuellem Stand der Technik so genannte Akkuschrauber. Sie verfügen über eine eingebaute elektrische Energiequelle und eine rotierende Klemmhalterung auf ihrer Abtriebswelle, in die ein passender Mitnehmer schnell eingesetzt werden kann.

Es ist ein wesentlicher Vorteil des erfinderischen Nothandkurbeltriebs, dass die Nothandkurbel auch in ihrer Wartestellung mit der Lastwelle verbunden ist. Damit bei Erschütterungen oder Lageänderungen der Lastwelle das Drehgleitstück nicht von der Lastwelle abrutscht, schlägt die Erfindung vor, dass der Verfahrweg des Drehgleitstückes auf der Lastwelle durch einen lastnahen Innenanschlag und einen lastfemen Außenanschlag begrenzt wird. Diese Anschläge können als Federscheiben in Nuten auf der Lastwelle eingeschoben werden. Eine Alternative sind Klemmstücke, die über das Wellenende hinweg in die gewünschte Position geschoben und dort verschraubt, verstiftet oder durch Sicherungsringe in Nuten gehalten werden. Wenn der Kurbeltrieb regelmäßigen Lageänderungen und/oder Erschütterungen ausgesetzt ist, bewegt sich das Drehgleitstück zwischen den Anschlägen hin und her, was zu unerwünschten Geräuschen und erhöhtem Verschleiß führen kann. Um das zu vermeiden, schlägt die Erfindung vor, dass eine Feder das Drehgleitstück an den Innenanschlag drückt. Diese Feder kann zum Beispiel als eine Schraubenfeder ausgeführt werden, die sich konzentrisch um die Lastwelle herum windet und sich auf den Außenanschlag abstützt.

In einer weiteren Variante wird die vorgenannte Feder genutzt, um eine Rutschkupplung auszubilden, die die Lastwelle mit einem begrenzten Haltemoment beaufschlägt. Ein solches Haltemoment ist unter den folgenden drei Bedingungen sinnvoll: Die Kurbel befindet sich in einer Wartestellung, die Lastwelle und ihr Kupplungsstück sind frei verdrehbar und die Last ist durch äußere Einwirkungen in unerwünschter Weise bewegbar. Ein Beispiel für eine solche Last ist eine an sich selbsthemmende, gering belastete Spindel, die durch von außen einwirkende Vibrationen in Drehung versetzt wird. Für diesen Fall ist an der Lastwelle eine drehmomentbegrenzte Rutschkupplung sinnvoll. Sie verhindert, dass sich die Lastwelle ungewollt verdrehen kann.

Als eine einfache Ausführung der Rutschkupplung schlägt die Erfindung vor, dass die zum Innenanschlag weisende Stirnseite des Drehgleitstückes wellenförmig ist und unter dem Druck der Feder in eine dazu komplementär geformte Stirnfläche des Innenanschlages eingreift. Wenn ein äußeres Drehmoment auf die Lastwelle einwirkt, wird dadurch der Innenanschlag verschwenkt. Daraufhin schiebt die in der Stirnfläche des Innenanschlages eingeformte Welle - z.B. ein Wellental - den komplementären Wellenberg auf der Stirnseite des Drehgleitstückes nach Art eines Keils in axialer Richtung und presst dadurch die Feder zusammen. Dabei erzeugt die Feder eine Gegenkraft, die der Verschwenkung der Welle entgegen gerichtet ist. Auf diese Weise werden Drehungen aufgrund relativ geringer, unerwünschter äußerer Drehmomente verhindert.

Für die Verbindung des Kurbelarms mit dem Drehgleitstück ist jede gelenkige Verbindung möglich. Eine sehr simple Ausführung ist ein Schlüsselring oder eine Kette. Deren Nachteile sind jedoch, dass der Kurbelarm bei Erschütterungen frei pendeln kann und dadurch Geräusche und Beschädigungen verursachen kann. Nachteilig ist auch, dass der Benutzer selbst für eine einwandfreie Führung des Mitnehmers am Kurbelarm gegenüber dem Kupplungsstück sorgen muss.

Die Erfindung bevorzugt deshalb, dass an das Drehgleitstück zwei Zapfen angeformt sind, auf denen die beiden Schenkel einer Gabel schwenkbar gelagert sind. Das Mittelstück der Gabel trägt einen Mitnehmer und ist mit dem Kurbelarm verbunden. Vorzugsweise kreuzt die Mittellinie der beiden Zapfen die Mittellinie der Lastwelle sowie die Mittellinie des Mitnehmers, sofern das Kupplungsstück konzentrisch zur Mittellinie der Lastwelle angeordnet ist. Dann sind im Betriebszustand die Mittellinien von Lastwelle, Kupplungsstück und Mitnehmer identisch. Weil sie dann eine zum Kurbelarm durchgehende Welle bilden, werden sehr viele Benutzer die ihnen gewohnte Konfiguration einer Kurbel erkennen und deshalb ohne große gedankliche Mühen den Mitnehmer zum Kupplungsstück führen können.

Eine sehr interessante Anwendung eines erfindungsgemäßen Nothandkurbettriebs ist der Hubantrieb einer vertikalen Teleskopstütze eines Sattelaufliegers oder eines anderen Fahrzeuganhängers. Der Spindeltrieb in diesen Stützen wird zumeist von einer Handkurbel angetrieben. Wenn die Stütze ohne Belastung ausgefahren werden soll, ist eine möglichst schnelle Bewegung erwünscht - der so genannte Schnellgang. Wenn die Stütze einen voll beladenen Anhänger anheben soll, muss das Drehmoment von der Handkurbel dafür noch ausreichen. Für diese Betriebsart ist deshalb eine sehr viel höhere Übersetzung zwischen Handkurbel und Spindeltrieb - der sog. Lastgang - erforderlich als im unbelasteten Schnellgang. Für den Wechsel zwischen diesen beiden Betriebsarten sind die meisten Stützen mit einem Schaltgetriebe zwischen Spindel und Handkurbel ausgerüstet.

Insbesondere bei Sattelaufliegern ist der Lastgang in der Praxis jedoch kaum noch erforderlich, da anstelle von einer Veränderung der Höhe der belasteten Stütze die Höhe des anzukoppelnden Sattelschleppers durch dessen Luftfederung angepasst wird.

Als eine besonders vorteilhafte Anwendung schlägt die Erfindung daher vor, die Teleskopstütze eines Sattelaufliegers mit einem erfindungsgemäßen Nothandkurbeltrieb auszurüsten und als Hubantrieb nur ein Getriebe mit einem festen Übersetzungsverhältnis einzubauen. Dadurch kann das bisher übliche, aufwändige Schaltgetriebe entfallen. Bei der Ausführung des Hubantriebs als Spindeltrieb wird nur die Übersetzung des ehemaligen Lastgangs gewählt - meist etwa 1mm Hub pro Kurbelumdrehung.

Im Normalbetrieb wird die Stütze durch das Ansetzen eines Akkuschraubers bewegt. Dank dessen hoher Motordrehzahl bewegt sich die Stütze trotz der hohen Übersetzung im Spindeltrieb noch ausreichend schnell.

In den seltenen Fällen einer Bewegung der Stütze unter Last kann das bisher gewohnte, manuelle Anheben des Sattelaufliegers dank der schnellen Verfügbarkeit des erfinderischen Nothandkurbeltriebs unverzüglich begonnen werden.

Im Folgenden sollen weitere Einzelheiten und Merkmale der Erfindung anhand eines Beispiels näher erläutert werden. Dieses Beispiel soll die Erfindung jedoch nicht einschränken, sondern nur erläutern. Es zeigt in schematischer Darstellung;
- Figur 1:: Verbindungsgabel einer Nothandkurbel mit der Lastwelle (1) mit Schnitt durch das Drehgleitstück (3)
- Figur 2:: wie Figur 1, jedoch um 90° weiter gedrehte Kurbel
- Figur 3:: wie Figur 2, jedoch mit abgeklappter Kurbel

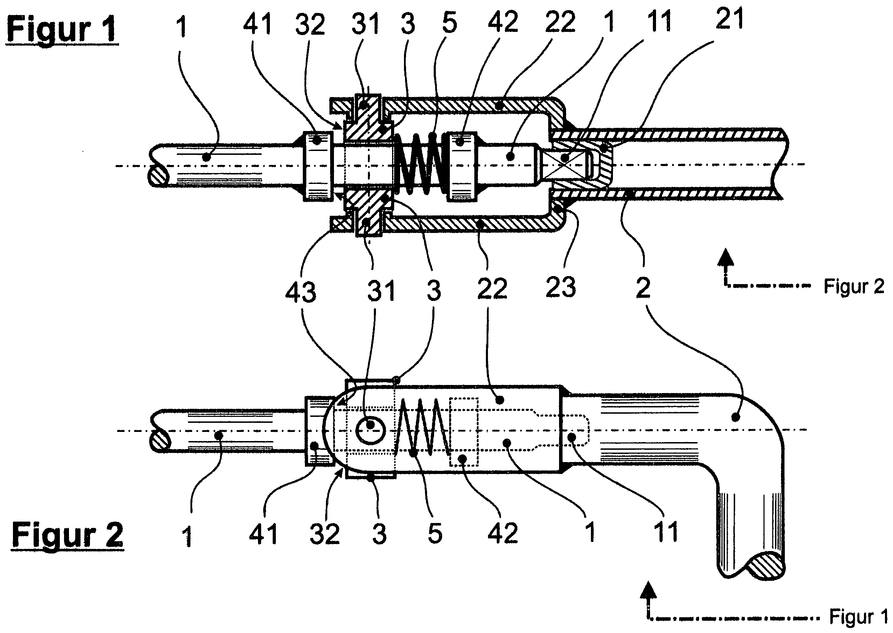

In **Figur 1** sind von einer erfindungsgemäßen Nothandkurbel nur das Ende des Kurbelarms (2) und die damit verbundene Verbindungsgabel zur Lastwelle (1) gezeichnet Der Übersichtlichkeit halber nicht eingezeichnet sind der größte Teil des Kurbelarms (2) sowie der daran befestigte Handgriff. Dargestellt ist der aktive Betriebszustand der Nothandkurbel, in welchem der Mitnehmer (21) im rohrförmigen und abgewinkelten Endbereich des Kurbelarms (2) auf das Kupplungsstück (11) der Lastwelle (1) aufgesteckt ist. Weil im gezeichneten Ausführungsbeispiel das Kupplungsstück (11) konzentrisch an das Ende der Lastwelle (1) angeformt ist, fluchten die Mittellinie des Kupplungsstückes (11), des Mitnehmers (21) und der Lastweite (1).

In Figur 1 ist die seitliche Abflachung des Kupplungsstücks (11) durch ein diagonales Kreuz gekennzeichnet. Es ist gut nachvollziehbar, dass der zum Kupplungsstück (11) komplementäre Mitnehmer (21) ein Drehmoment auf das Kupplungsstück (11) und damit auf die Lastwelle (1) übertragen kann.

An dem rohrförmigen Endbereich des Kurbelarms (2) ist eine Gabel befestigt, die ihrer Länge nach zeichnerisch geschnitten ist. Die beiden Schenkel (22) der Gabel erstrecken sich parallel zu beiden Seiten der Lastwelle (1). In den Endbereich eines jeden Schenkels (22) ist eine Bohrung eingebracht, in die je ein Zapfen (31) eingreift.

In Figur 1 ist gut nachvollziehbar, dass die Schenkel (22) um die Zapfen (31) verschwenkbar sind. Dadurch verschwenken sich auch die Gabel und der daran befestigte Kurbelarm (2). Die Schenkel (22) der Gabel führen also den Kurbelarm (2) beim Verschwenken. Zusätzlich dienen sie auch zur Stabilisierung des Kurbelarms (2) im Betriebszustand, indem sie quer zur Mittellinie wirkende Kräfte der Handkurbel auf die Lastwelle (1) ableiten.

In Figur 1 ist gut erkennbar, dass das Drehgleitstück (3) auf der Lastwelle (1) entlang gleitet und von der Feder (5) in Richtung des Innenanschtags (41) geschoben wird, wobei sich die Feder (5) auf den Außenanschlag (42) abstützt. Bei genauerem Hinsehen ist erkennbar, dass das Drehgleitstück (3) noch etwas vom Innenanschlag (41) entfernt ist Dennoch ist auch in diesem Zwischenzustand bereits Drehmoment vom Kurbelarm (2) über die Gabel auf die Lastwelle (1) übertragbar.

In Figur 1 ist gut nachvollziehbar, aber nicht eingezeichnet, dass sich unter dem Druck der Feder (5) das Drehgleitstück (3) auf den Innenanschlag (41) hin bewegt, sodass alsbald die Stirnseite (32) des Drehgleitstücks (3) auf die Stirnfläche (43) des Innenanschlags (41) gepresst wird. Ebenfalls nicht eingezeichnet ist in Figur 1, dass die Stirnfläche (32) und die Stirnseite (43) als eine Rutschkupplung ausgebildet sind, die sehr geringe, unerwünschte Drehmomente von der Lastwelle 1 auf das Drehgleitstück (3) und von dort auf den Kurbelarm (2) übertragen.

In **Figur 2** ist der gleiche Betriebszustand wie in Figur 1 dargestellt, jedoch ist der Kurbelarm (2) gegenüber Figur 1 um 90° weiter gedreht. Dadurch ist von der Gabel am Kurbelarm nur noch ein Schenkel (22) sichtbar und ein Zapfen (31) am Drehgleitstück (3) weist auf den Betrachter zu. In dieser Winkelsteltung des Kurbelarms (2) ist sein abgewinkeltes und mit der Gabel fest verbundenes Ende besonders gut erkennbar.

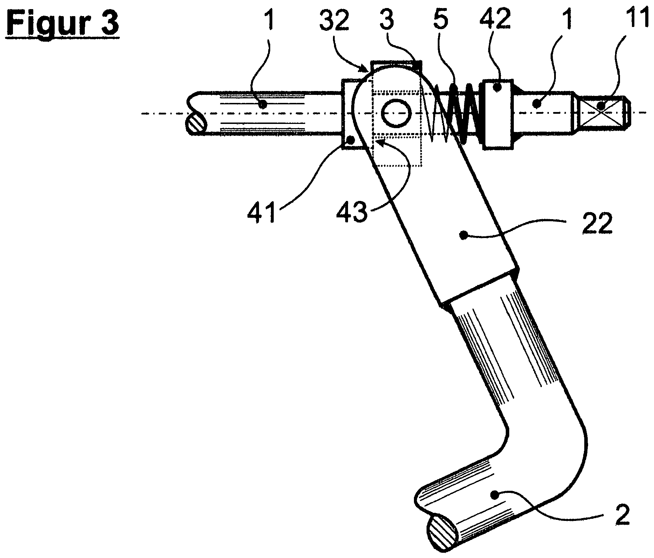

In **Figur 3** sind der Kurbelarm (2) und die daran befestigte Gabel mit ihrem Schenkel (22) aus der gleichen Richtung wie in Figur 2 zu sehen. Der wesentliche Unterschied ist, dass die Nothandkurbel in eine Wartestellung abgeklappt ist, so dass die Schenkel (22) nunmehr um die Zapfen (31) verschwenkt sind. Wegen des Gewichtes des - hier nur teilweise eingezeichneten - Kurbelarms (2) und des nicht sichtbaren Handgriffes hat sich der Schenkel (22) nur um ca. 65° aus der Mittellinie der Lastwelle (1) heraus verschwenkt. In Figur 3 gut nachvollziehbar ist, dass der Kurbelarm (2) je nach Erfordernis weiter verschwenkt werden kann, z,B. bis zu einer Halterung.

Das Kupplungsstück (11) ragt frei in den Raum hinein, so dass ein externer Antrieb wie zum Beispiel ein Motor leicht darauf aufgesteckt werden kann. Durch den Vergleich mit Figur 1 wird klar, dass sich bei einer Drehung der Lastwelle (1) das Drehgleitstück (3) nicht mit bewegt, sondern auf der Lastwelle (1) gleitet, so dass sich die Schenkel (22) und damit die gesamte Nothandkurbel nicht bewegt.

In Figur 3 wird deutlich, dass beim Zurückschwenken des Schenkels (22) in die Betriebsstellung auch das Drehgleitstück (3) auf der Lastwelle (1) gegen die Kraft der Feder (5) nach rechts - also von dem Innenanschlag (41) weg - verschoben werden muss, damit sich der - nur in Figur 1 sichtbare - Mitnehmer (21) vor das Kupplungsstück (11) schieben kann und von der Kraft der Feder (5) darauf gedrückt wird.

In Figur 3 wird deutlich, dass die Feder (5) die Stirnseite (32) des Drehgleitstückes (3) auf die Stirnfläche(43) des Innenanschlages (41) drückt. Nicht in Figur 3 eingezeichnet ist, dass die Stirnseite (32) und die Stirnfläche (43) als Rutschkupplung ausgebildet sind. Für den Fall, das von der Last her auf die Lastwelle (1) ein sehr geringes, unerwünschtes Stör-Drehmoment ausgeübt wird, leitet diese Rutschkupplung das Stördrehmoment auf das Drehgleitstück (3) ab. Von dort wird es auf die Schenkel (22) und weiter auf den Kurbelarm (2) geleitet. Wenn der Kurbelarm (2) in der Position der Figur 3 durch eine - hier nicht gezeichnete - Vorrichtung fixiert ist, wird damit eine unerwünschte Drehung der Lastwelle (1) durch das unerwünschte Stördrehmoment unterbunden.

### Bezugszeichenliste

- 1: Lastwelle
- 11: Kupplungsstück auf Lastwelle 1
- 2: Kurbelarm
- 21: Mitnehmer, verbunden mit Kurbelarm 2
- 22: Schenkel einer Gabel am Kurbelarm 2
- 23: Mittelstück der Gabel am Kurbelarm 2
- 3: Drehgleitstück, um Lastwelle 1 verdrehbar und auf Lastwelle 1 verschiebbar
- 31: Zapfen am Drehgleitstück 3
- 32: Stirnseite des Drehgleitstückes 3
- 41: Innenanschlag auf Lastwelle 1 für Drehgleitstück 3
- 42: Außenanschlag auf Lastwelle 1 für Drehgleitstück 3
- 43: Stirnfläche des Innenanschlages 41
- 5: Feder, stützt sich auf den Außenanschlag 42 ab und drückt das Drehgleitstück 3 gegen den Innenanschlag 41

## Patentansprüche

1. Nothandkurbettrieb bestehend aus
- einer in Drehung zu bringenden Lastwelle (1) und
- einem gelenkig mit der Lastwelle (1) verbundenen Kurbelarm (2) und
- einem Kupplungsstück (11) auf der Lastwelle (1) und
- einem Mitnehmer (21),
- der fest mit dem Kurbelarm (2) verbunden ist und
- der zum Kupplungsstück (11) komplementär geformt und lösbar damit verbindbar ist,
**dadurch gekennzeichnet, dass**
- ein Drehgleitstück (3) auf der Lastwelle (1) in deren Längsrichtung verschiebbar und um deren Längsrichtung herum verdrehbar gelagert ist und
- am Drehgleitstück (3) der Kurbelarm (2) gelenkig befestigt ist.

2. Nothandkurbeltrieb, nach Anspruch 1, **dadurch gekennzeichnet, dass** das Kupplungsstück (11) konzentrisch auf der Lastwelle (1) angeordnet ist.

3. Nothandkurbeltrieb nach einem der vorhergehenden Ansprüche, **dadurch gekennzeichnet, dass** auf das Kupplungsstück (11) alternativ zum Kurbelarm (2) ein anderes, externes Werkzeug oder ein Motor aufsetzbar ist.

4. Nothandkurbeltrieb nach einem der vorhergehenden Ansprüche, **dadurch gekennzeichnet, dass** der Verfahrweg des Drehgleitstückes (3) auf der Lastwelle (1) durch einen lastnahen Innenanschlag (41) und einen lastfernen Außenanschlag (42) begrenzt wird.

5. Nothandkurbeltrieb nach Anspruch 4, **dadurch gekennzeichnet, dass** eine Feder (5) sich auf den Außenanschlag (42) abstützt und das Drehgleltstück (3) gegen den Innenanschlag (41) drückt.

6. Nothandkurbettrieb nach Anspruch 5, **dadurch gekennzeichnet, dass** die zum Innenanschlag (41) weisende Stirnseite (32) des Drehgleitstückes (3) wellenförmig ist und unter dem Druck der Feder (5) in eine dazu komplementär geformte Stirnfläche (43) des Innenanschlages (41) eingreift oder Stirnseite (32) und Stirnfläche (43) als eine andersartige, drehmomentbegrenzte Rutschkupplung ausgebildet sind.

7. Nothandkurbeltrieb nach einem der vorhergehenden Ansprüche , **dadurch gekennzeichnet, dass** an das Drehgleitstück (3) zwei Zapfen (31) angeformt sind, auf denen die beiden Schenkel (22) einer Gabel schwenkbar gelagert sind, wobei das Mittelstück der Gabel einen Mitnehmer (21) trägt und mit dem Kurbelarm (2) verbunden ist.

8. Nothandkurbeltrieb nach einem der vorhergehenden Ansprüche, **dadurch gekennzeichnet, dass** durch die Lastwelle (1) der Hubantrieb einer vertikalen Teleskopstütze eines Sattelaufliegers oder eines anderen Fahrzeuganhängers angetrieben wird.

9. Nothandkurbeltrieb nach Anspruch 8, **dadurch gekennzeichnet, dass** der Hubantrieb ein Getriebe mit einem festen Übersetzungsverhältnis ist.

## Claims

1. Emergency hand crank drive consisting of a load shaft (1) that is to be made to rotate, and a crank arm (2) hingedly connected to said load shaft (1), and a coupling piece (11) on said load shaft (1) and a catch (21), which is fixedly connected to said crank arm (2) and which has a shape that is complementary to the shape of said coupling piece (11) and which can be releasably connected to said coupling piece (11),
**characterized in that**
a rotary sliding piece (3) is mounted on said load shaft (1) in such a way as to be movable in the longitudinal direction of said load shaft (1) and be rotatable around the longitudinal direction thereof and said crank arm (2) is hingedly secured to said rotary sliding piece (3).

2. Emergency hand crank drive, according to claim 1,
**characterized in that** said coupling piece (11) is arranged concentrically on said load shaft (1).

3. Emergency hand crank drive, according to one of the preceding claims, **characterized in that** a different external tool or a motor can be placed on said coupling piece (11) as an alternative to said crank arm (2).

4. Emergency hand crank drive, according to one of the preceding claims, **characterized in that**
the travelling distance of said rotary sliding piece (3) on said load shaft (1) is limited by an inner stopper (41) close to the load and an outer stopper (42) which is remote from the load.

5. Emergency hand crank drive, according to claim 4,
**characterized in that**
a spring (5) is supported from said outer stopper (42) and said spring (5) presses said rotary sliding piece (3) against said inner stopper (41).

6. Emergency hand crank drive, according to claim 5,
**characterized in that**
the front side (32) of said rotary sliding piece (3), which faces said inner stopper (41), is corrugated and engages under the pressure of said spring (5) into the face (43) of said inner stopper (41), which is formed complementary to said front side (32), or said front side (32) and said face (43) are designed as a different type of torque-limited slip clutch.

7. Emergency hand crank drive, according to one of the preceding claims, **characterized in that**
two gudgeons (31) are shaped onto said rotary sliding piece (3) and on said gudgeons (31) the two limbs (22) of a fork are pivotally mounted, whereby the centerpiece (23) of said fork carries said catch (21) and said centerpiece (23) is connected to said crank arm (2).

8. Emergency hand crank drive, according to one of the preceding claims, **characterized in that**
said load shaft (1) drives the lifting drive of a vertical telescopic support of a semi-trailer or other vehicle trailer.

9. Emergency hand crank drive, according to claim 8,
**characterized in that**
the lifting drive is a transmission having a fixed ratio.

## Revendications

1. Commande à manivelle manuelle d'urgence composée
- d'un arbre de charge (1) à mettre en rotation et
- d'un bras de manivelle (2) relié de manière articulée à l'arbre de charge (1)
et
- d'une pièce de couplage (11) sur l'arbre de charge (1) et
- d'un entraîneur (21),
- qui est relié fixement au bras de manivelle (2) et
- qui est formé de manière complémentaire à la pièce de couplage (11) et qui peut être relié avec de façon séparable,
**caractérisée en ce**
- **qu'**une pièce de translation-rotation (3) est disposée sur l'arbre de charge (1) en pouvant être déplacée dans son sens longitudinal et en pouvant tourner tout autour sur son sens longitudinal
et
- est fixée de manière articulée sur la pièce de translation-rotation (3) du bras de manivelle (2).

2. Commande à manivelle manuelle d'urgence, selon la revendication 1, **caractérisée en ce que** la pièce de couplage (11) est disposée de façon concentrique sur l'arbre de charge (1).

3. Commande à manivelle manuelle d'urgence selon l'une des revendications précédentes, **caractérisée en ce qu'**un autre outil externe ou un moteur peut être placé sur la pièce de couplage (11) en variante au bras de manivelle (2).

4. Commande à manivelle manuelle d'urgence selon l'une des revendications précédentes, **caractérisée en ce que** la course de la pièce de translation-rotation (3) sur l'arbre de charge (1) peut être limitée par une butée intérieure (41) proche de la charge et une butée extérieure (42) éloignée de la charge.

5. Commande à manivelle manuelle d'urgence selon la revendication 4, **caractérisée en ce qu'**un ressort (5) s'appuie sur la butée extérieure (42) et appuie la pièce de translation-rotation (3) contre la butée intérieure (41).

6. Commande à manivelle manuelle d'urgence selon la revendication 5, **caractérisée en ce que** la face frontale (32) de la pièce de translation-rotation (3) orientée vers la butée intérieure (41) est ondulée et, sous la pression du ressort (5), s'engage dans une surface frontale (43) de la butée intérieure (41) formée de façon complémentaire pour cela ou bien la face frontale (32) et la surface frontale (43) sont conçues en tant qu'accouplement à glissement d'autre type, limité par le couple de rotation.

7. Commande à manivelle manuelle d'urgence selon l'une des revendications précédentes, **caractérisée en ce que** deux pivots (31) sont rapportés sur la pièce de translation-rotation (3), sur lesquels les deux branches (22) d'une fourche sont disposées pivotantes, dans lequel la pièce centrale de la fourche porte un entraîneur (21) et est reliée au bras de manivelle (2).

8. Commande à manivelle manuelle d'urgence selon l'une des revendications précédentes, **caractérisée en ce que** la commande de levage d'une potence télescopique verticale d'un semi-remorque ou d'une autre remorque de véhicule est entraînée par le biais de l'arbre de charge (1).

9. Commande à manivelle manuelle d'urgence selon la revendication 8, **caractérisée en ce que** la commande de levage est un engrenage avec un rapport de translation fixe.
